# EUROPEAN PATENT SPECIFICATION

(11) **EP 0 368 508 B1**
(45) Date of publication and mention of the grant of the patent: **14.09.1994**
(21) Application number: 89310987.6
(22) Date of filing: 25.10.1989
(51) Int. Cl.: C09B 7/00

(54) **Process for the preparation of indigo compounds**
Verfahren zur Herstellung von Indigoverbindungen
Procédé de préparation de composés indigo

(30) Priority: 10.11.1988 JP 282515/88; 11.11.1988 JP 283750/88
(43) Date of publication of application: 16.05.1990
(73) Proprietor: MITSUI TOATSU CHEMICALS, Inc., Chiyoda-Ku Tokyo 100 (JP)
(72) Inventor: Yamamoto, Yoshihiro, Yokohama-shi Kanagawa-ken (JP); Takaki, Usaji, Fujisawa-shi Kanagawa-ken (JP); Aoki, Shinobu, Yokohama-shi Kanagawa-ken (JP); Hara, Isao, Yokohama-shi Kanagawa-ken (JP)
(74) Representative: West, Alan Harry

(56) References cited:
- JUSTUS LIEBIGS ANNALEN DER CHEMIE, vol. 558, 1947, pages 91-98, Verlag ChemieGmbH, Heidelberg, DE; B. WITKOP et al.: "Gelenkte Oxydationen in der Indol-Reihe. II"
- JUSTUS LIEBIEGS ANNALEN DER CHEMIE, vol. 558, 1947, pages 98-109, Verlag ChemieGmbH, Heidelberg, DE; B. WITKOP: "Gelenkte Oxydationen in der Indol-Reihe. III"
- BULL. AGR. CHEM. SOC. JAPAN, vol. 20, no. 2, 1956, pages 80-83; S. SAKAMURA etal.: "The photochemical reaction products of indole in sunlight"

## Description

This invention relates to a process for the preparation of an indigo compound. More specifically, it relates to a process for the preparation of an indigo compound by reacting an indole compound having no substituent at the 2- and 3-positions with a percarboxylic acid in the presence of a specific solvent.

Indigo compounds are important compounds that are useful as dyes. The presently employed industrial processes for the preparation of indigo comprise forming an N-phenylglycine salt from aniline and chloroacetic acid, or from aniline, cyanic acid and formaldehyde, converting this salt into an indoxyl compound by alkali fusion at elevated temperature, and then oxidizing this compound with air. However, these processes are not only complicated ones involving many steps, but also require the use of large amounts of potassium hydroxide and sodium hydroxide. Moreover the recovery and reuse of used potassium hydroxide and sodium hydroxide has the disadvantage of consuming much energy and requiring special equipment. Therefore, conversion to a simpler process has been desired.

Meanwhile, there is a report that indole have been reacted with perbenzoic acid, which is a percarboxylic acid, in chloroform as a solvent by allowing the reaction mixture to stand in a refrigerator overnight (Justus Liebigs Annalen der Chimie, Vol. 558, pp. 91-98, 1947). According to the report, it has been reported that o-formaminobenzaldehyde was produced together with a variety of other products, and a very small amount of indigo was also formed at the same time. Moreover, there is another report that peracetic acid, which is a percarboxylic acid, was produced from hydrogen peroxide and acetic acid in the reaction system and reacted with indole in acetic acid as a solvent (Bull. Agr. Chem. Soc. Japan, Vol. 20, pp. 80-83, 1956). According to the report, it has been reported that 2,2-diindyl-ψ-indoxyl, which is a trimer of indole skeleton, was produced as a main product and in addition a very small amount of indigo was formed as a by-product. However, each of these reports was concerned with a brief investigation on the reactivity of indole, main products were o-formaminobenzaldehyde and 2,2-diindyl-ψ-indoxyl, respectively, and indigo, which is the desired product in the present invention, was nothing but a by-product formed in very low yield.

The present invention seeks to provide an improved and simple process for the preparation of indigo compounds which uses an indole compound as starting material, and can achieve higher efficiency than the prior art processes described above.

The present inventors have investigated methods for producing indigo efficiently be reacting indole with a percarboxylic acid. They have found that the indigo yield is increased sharply, if the reaction of indole with a percarboxylic acid is carried out in a specific liquid medium, and the present invention has been developed on the basis of those findings.

According to the present invention, there is now provided a process for the preparation of an indigo compound which comprises reacting a corresponding indole compound having no substituent at the 2- and 3-positions with a percarboxylic acid in an aprotic solvent at a temperature above 60°C or in an alcohol solvent.

The indole compound having no substituent at the 2- and 3-positions, which is used as one of the starting materials in the process of the present invention, is selected from the group consisting of indole; alkylindoles having 1 to 4 alkyl groups of 1 to 10 carbon atoms, such as 1-methylindole, 4-ethylindole, 5-methylindole, 6-methylindole, 6-isopropylindole, 7-methylindole and 4,5-dimethylindole; cycloalkylindoles having 1 to 4 cycloalkyl groups of 3 to 12 carbon atoms, such as 4-cyclohexylindole and 5-cyclopentylindole; arylindoles having 1 to 4 unsubstituted or alkyl-substituted aryl groups of 6 to 30 carbon atoms, such as 5-phenylindole and 6-β-naphthylindole; halogenated indoles having 1 to 4 halogen atoms, such as 4-chloroindole, 5-chloroindole, 5,7-dichloroindole, 5-bromoindole, 6-bromoindole, 5,7-dibromoindole and 4-chloro-5-bromoindole; hydroxyindoles having 1 to 4 hydroxyl groups, such as 4-hydroxyindole, 5-hydroxyindole and 4,5-dihydroxyindole; alkoxyindoles having 1 to 4 alkoxy groups of 1 to 10 carbon atoms, such as 4-methoxyindole and 5-benzyloxyindole; phenoxyindoles having 1 to 4 phenoxy groups of 6 to 30 carbon atoms, such as 5-phenoxyindole; halogenated alkylindoles having 1 to 3 halogen atoms and 1 to 3 alkyl groups of 1 to 10 carbon atoms, such as 4-chloro-5-ethylindole, 6-chloro-4-methylindole, 4-bromo-5-ethylindole and 5-bromo-4-methylindole; nitroindoles having 1 to 4 nitro groups, such as 4-nitroindole, 5-nitroindole and 7-nitroindole; acylindoles having 1 to 4 acyl groups of 2 to 20 carbon atoms, such as 1-benzoylindole and 4-acetylindole; acyloxyindoles having 1 to 4 acyloxy groups of 2 to 20 carbon atoms, such as 1-acetoxyindole and 4-benzoyloxyindole; indolecarboxylic acids, such as indole-5-carboxylic acid, and esters thereof; N,N-dialkylaminoindoles having 1 to 4 N,N-dialkylamino groups in which each alkyl group contains 1 to 10 carbon atoms, such as 5-N,N-dimethylaminoindole; and sulfonated indoles. Of course, these indole compounds should not have the above-described substituent groups at the 2- and 3-positions. In addition, indole compounds having a combination of two or more types of substituent groups as described above are also useful in the process of the present invention. At positions other than the 2- and 3-positions, these indole compounds may have any substituent that does not interfere with the reaction. Among these indole compounds, indole is especially preferred.

The percarboxylic acid, which is used as the other starting material in the process of the present invention, is an organic compound having at least one percarboxyl (-COOOH) group. Useful percarboxylic acids are listed, for example, in the tables given in D. Swern, "Organic Peroxides, Vol. I", Wiley-Interscience (1970), pp. 401-403 and pp. 436-445. Among these percarboxylic acids, peraliphatic acids such as peracetic acid and perpropionic acid, and perbenzoic acid derivatives such as perbenzoic acid, m-chloroperbenzoic acid, p-chloroperbenzoic acid, o-methyl perbenzoic acid and p-isopropyl perbenzoic acid, are preferred.

These percarboxylic acids may be used alone, or two or more of them may be used in admixture or in sequence. Alternatively, it is also possible to use a suitable combination of components (e.g., hydrogen peroxide and a carboxylic acid) which can produce such a percarboxylic acid in the reaction system. Although the amount of percarboxylic acid used is not critical, it is usually in the range of about 0.01 to about 100 moles, preferably about 0.1 to about 20 moles, per mole of the indole compound.

The alcohol solvents according to the process of the present invention are listed, for example, in Shozo Asahara et al. (ed.), "Solvent Handbook", the first edition, Kodansha (1976), pp. 327-420. Preferred alcohol solvents are, for example, methanol, ethanol, 1-propanol, 1-butanol, tert-butanol, 1-hexanol, 2-octanol, allyl alcohol, benzyl alcohol, cyclohexanol, 1,2-ethanediol, 1,4-butanediol, glycerol and the like. These solvents may be used alone or in admixture of two or more.

The aprotic solvents according to the process of the present invention are defined compounds as a solvent which is incapable of donating proton itself and does not self-dissociate, in Shozo Asahara et al. (ed.), "Solvent Handbook", the first edition, Kodansha (1976), pp. 25. The aprotic solvents usable in the present invention are not limited by the examples described above, and examples thereof include aliphatic and alicyclic hydrocarbons such as n-hexane, 2-methylpentane, n-octane, isooctane, cyclohexane, bicyclohexyl and p-menthane; aromatic hydrocarbons such as benzene, toluene, xylene, ethylbenzene, cumene, p-cymene and naphthalene; aliphatic and aromatic halogen compounds such as chloroform, carbon tetrachloride, 1,2-dichloroethane, chlorobenzene, bromobenzene, chlorotoluene and dichlorobenzene; ethers such as dipropyl ether, diphenyl ether, tetrahydrofuran, ethylene glycol diethyl ether and phenetole; ketones such as methyl ethyl ketone, 2-hexanone, acetonylacetone and acetophenone; esters such as propyl acetate, ethyl propionate, methyl benzoate and dimethyl phthalate; carbonates such as diethyl carbonate and propylene carbonate; aliphatic and aromatic nitro compounds such as nitroethane and nitrobenzene; and nitriles such as acetonitrile and benzonitrile. These solvents may be used alone or in admixture of two or more.

In the process of the present invention, no particular limitation is placed on the method by which the reaction is carried out. There may be employed in any of batch, semibatch and continuous operations. More specifically, there may be employed a method in which the indole compound and percarboxylic acid together with liquid medium are charged into a reactor all at once, a method in which materials are continuously fed to a reactor all at once, a method in which a mixture of liquid medium and one material is continuously or intermittently fed with the other material, and a method in which liquid medium is continuously or intermittently, at the same time or alternately, fed with each of these materials.

In the case where alcohol solvent is used as liquid medium, the reaction temperature is usually in the range of about -10°C to about 170°C. If the reaction temperature is lower than the lowest limit, the reaction will become unduly slow, while if it is higher than the supremum, the reaction may be attended with danger because of violent decomposition of the percarboxylic acid. Preferably, the reaction temperature is in the range of about 10°C to about 150°C, particularly about 60°C to about 150°C.

In the case where aprotic solvent is used as liquid medium, the reaction temperature is important. The reaction is carried out over 60°C with heating. If the reaction temperature is lower than this temperature, the reaction will not only become slow, but the formation of indigo is also depressed extremely. Preferably, the reaction temperature is continually kept over 60°C from the beginning to the end. Particularly, it is in the range of about 60°C to about 150°C.

The reaction time is usually within about 50 hours and preferably in the range of about 0.01 to about 20 hours. According to circumstances, the reaction may be carried out under reduced, atmospheric or superatmospheric pressure.

In the process of the present invention, the reaction may be carried out in an atmosphere of inert gas or in the presence of molecular oxygen such as air.

In the process of the present invention, a metallic compound catalyst capable of oxidizing the carbon atom at the 3-position of the indole compound and/or a promotor can be used for enhancing the yield and selectivity of the indigo compound and the reaction rate. The term "metallic compound catalyst capable of oxidizing the carbon atom at the 3-position of the indole compound" comprehends compounds of metals which, in the reaction of the indole compound with the percarboxylic acid, can cause the carbon atom at the 3-position of the indole compound to be oxidized by an oxygen atom.

For example, this catalyst is at least one compound selected from the group consisting of compounds of the metals of groups 4A, 5A and 6A of the periodic table, manganese, silver and aluminium, in which they are used for a reaction of epoxidizing olefins; the metals of the iron group, the platinum group, copper and zinc, in which they are used for a ketogenic reaction of olefins or alcohols. Specifically, the compound of the metals of groupd 4A, 5A and 6A of the periodic table include various compounds of titanium, zirconium, hafnium, vanadium, niobium, tantalum, chrominum, molybdenum and tungsten. Similarly, the compound of the iron group includes compounds of iron, cobalt and nickel, and the compound of the platinum group includes compounds of ruthenium, rhodium, palladium, osmium, iridium and platinum. More specifically, they include inorganic compounds of the aforesaid metals, such as halides, oxyhalides, oxides, mixed oxides, sulfides, borides, phosphides, hydroxides, oxyhydroxides, cyano complexes, inorganic acid salts (e.g., sulfates, nitrates and phosphates), metallic oxyacids (e.g., titanic acid, molybdic acid and tungstic acid) and salts thereof, and heteropoly-acids (e.g., phosphomolybdic acid and silicotungstic acid) and salts thereof; compounds of the aforesaid metals having an organic group in at least a portion thereof, such as organic acid salts (e.g., acetates, oxalates, benzoates and naphthenates), alkoxides (e.g., those derived from ethyl alcohol and isopropyl alcohol), phenoxides (e.g., those derived from phenol and m-chlorophenol), and halogen compounds having an alkoxy or phenoxy group; complex compounds of the aforesaid metals, such as carbonyl complexes, amine complexes, pyridine complexes (e.g., those derived from pyridine and bipyridyl), oxo complexes, thiolate complexes (e.g., those derived from cysteine and dithiocatechol), sulfide complexes, dithiocarbamate complexes, thiocyanate complexes, isocyanate complexes, nitrosyl complexes, phosphine complexes (e.g., those derived from triphenylphosphine and 1,2-diphenylphosphinoethane), phosphoryl complexes, phthalocyanine complexes, porphyrin complexes, nitrile complexes, ether complexes, ketone complexes, β-ketocarbonyl complexes (e.g., those derived from acetylacetone), alkyl and allene complexes, olefin complexes and cyclopentadienyl complexes; and compounds of the aforesaid metals coming under two or more of the foregoing categories.

Moreover, they include catalysts which carried the aforesaid metals on carriers such as active carbon, silica gel, alumina, silica-alumina, diatomaceous earth, magnesia, pumice and molecular sieve, or Raney catalysts.

These metallic compounds may be used alone or in admixture of two or more. It is also possible to use a suitable combination of components which can produce any of these metallic compounds in the reaction system. Although these metallic compounds are preferably soluble in the reaction mixture, they may be partially or totally insoluble therein. These metallic compounds are usually used in an amount of not greater than 0.5 mole, preferably 0.00001 to 0.1 mole, per mole of the indole compound.

The promotor used in the process of the present invention includes, for example, dehydrating agents such as silica gel, sodium sulfate, methyl orthoformate, acetic anhydride and molecular sieve; radical scavengers such as phenol, tert-butylcatechol, 2,6-di-tert-butylphenol, 3-tert-butyl 4-hydroxy-5-methyl phenyl sulfide, benzoquinone and hydroquinone; ligands of catalytic metals such as phosphines and phosphates (e.g., triphenylphosphine, 1,2-diphenylphosphinoethane, triisopropoxyphosphine and triphenyl phosphate), arsenic compounds (e.g., arsenic triphenyl), amines (e.g., dimethyl amine and triethyl amine), and pyridines (e.g., pyridine, quinoline, acridine, dipyridyl and phenanthroline); boric acid esters and metaboric acid esters such as triethyl borate, triisopropyl borate, tricumyl borate, cyclohexyl metaborate, phenyl metaborate and menthyl metaborate; salts of alkaline metals and alkaline earth metals with organic or inorganic acids, such as lithium acetate, lithium iodide, sodium acetate, sodium carbonate, potassium nitrate, potassium benzoate, barium sulfate, barium chloride, barium propionate, and magnesium acetate; salts of rare earth metals such as cerium acetate and lanthanum acetate; stabilizers for oxidixzing agents, such as sodium carbonate, sodium stannate, barbital, 8-hydroxy-quinoline, uric acid, hippuric acid, acetanilide, phenacetin, phosphoric acid, ethylenediaminetetraacetic acid disodium salt and sodium picrate; producers of adducts with oxidizing agents, such as nitriles (e.g., acetonitrile, adiponitrile and benzonitrile), isocyanates (e.g., phenylisocyanate), ureas (e.g., tetramethylurea and 1,1′-carbonyl bis(1,2,4-triazole)) and diisopropylcarbodiimide; trimethyl dichloroantimony, tetramethyltin, di-n-butyl dichlorotin, pyrimidine and cyanuric acid. Among those, dehydrating agents, radical scavengers, ligands of catalytic metals, boric acid esters and metaboric acid esters, salts of alkaline metals and alkaline earth metals with organic or inorganic acids, and salts of rare earth metals are preferred. These promotors may be used alone, or in admixture of two or more. These promotors are usually used in an amount of not greater than 50 moles, preferably in the range of 0.001 to 20 moles, per mole of the indole compound.

In the process of the present invention, the desired indigo compound can be obtained by working up the resulting reaction mixture in the usual manner. On completion of the reaction, most of the formed indigo compound has usually precipitated out. Therefore, the indigo compound can easily be recovered as a solid according to a conventional solid-liquid separation technique such as filtration, centrifugation or decantation. Where the amount of the precipitated indigo compound is insufficient, it is also possible to concentrate the reaction mixture and then recover the resulting increased amount of precipitate therefrom.

The present invention is further illustrated by the following examples. These examples are intended to illustrate the invention and are not to be construed to limit the scope of the invention.

### Example 1

A four neck flask having a capacity of 100 ml and fitted with a stirrer, a thermometer, a dropping funnel and a cooling coil was charged with 1.0 g (8.5 mmoles) of indole, and 17 ml (14 g) of methanol. While this mixture was being heated at 66°C under reflux of the methanol on an oil bath and stirred, a solution of 2.95 g (17.1 mmoles) of m-chloroperbenzoic acid as a percarboxylic acid dissolved in 58 ml (46 g) of methanol was added dropwise thereto over a period of 1.5 hours. Thereafter, the reaction was continued for 3.5 hours under the same conditions. The reaction mixture was homogeneous at the start of the reaction, but a deep blue solid gradually precipitated out with the progress of the reaction. After completion of the reaction, this reaction mixture was filtered. The solid so separated was washed enough with methanol and then dried at 50°C under reduced pressure to obtain 188 mg of a deep blue solid product. Elemental analysis and IR spectroscopic analysis revealed that this product was indigo. The molar yield of the isolated indigo as based on the charged indole (hereinafter referred to briefly as the indigo yield) was 16.8%.

### Comparative Example 1

Reaction and after-treatment were carried out in the same manner as in Example 1, except that 17 ml (18 g) and 58 ml (61 g) of acetic acid for dissolving indole and m-chloroperbenzoic acid, respectively, were used in place of the methanol, and the reaction temperature was kept at 66°C. Thus, there was obtained 35 mg of indigo. The indigo yield was 3.1%.

### Example 2

Reaction and after-treatment were carried out in the same manner as in Example 1, except that 17 ml and 58 ml of tert-butanol for dissolving indole and m-chloroperbenzoic acid, respectively, were used in place of the methanol, and the reaction temperature was changed to 80°C.

Thus, there was obtained 296 mg of indigo. The indigo yield was 26.4%.

### Example 3

1.0 mg (8.5 mmoles) of indole and 35 ml of methanol were charged in a four neck flask as used in Example 1. While this mixture was being heated under reflux of the methanol on an oil bath and stirred, 1.95 g (10.3 mmoles as peracetic acid) of a 40 wt.% acetic acid solution of peracetic acid was added dropwise thereto over a period of 15 minutes. Thereafter, the reaction was continued for 5 hours under the same conditions. The resulting reaction mixture was worked up in the same manner as in Example 1. Thus, there was obtained 116 mg of indigo, and the indigo yield was 10.4%.

### Example 4

Reaction and after-treatment were carried out in the same manner as in Example 3, except that 35 ml of ethanol was used in place of the methanol, and the reaction temperature was changed to 80°C. As a result, the indigo yield was 18.3%.

### Comparative Example 2

Reaction and after-treatment were carried out in the same manner as in Example 3, except that 35 ml of acetic acid was used in place of the methanol, and the reaction temperature was changed to 80°C. As a result, the indigo yield was 3.0%.

### Example 5

A four neck flask having a capacity of 100 ml and fitted with a stirrer, a thermometer, a dropping funnel and a cooling coil was charged with 1.0 g (8.5 mmoles) of indole, and 17 ml (15 g) of toluene.

While this mixture was being heated at 80°C on an oil bath and stirred, a solution of 2.95 g (17.1 mmoles) of m-chloroperbenzoic acid as a percarboxylic acid dissolved in 58 ml (50 g) of toluene was added dropwise thereto over a period of 1.5 hours. Thereafter, the reaction was continued for 3.5 hours under the same conditions. The resulting reaction mixture was worked up in the same manner as in Example 1. Thus, there was obtained 604 mg of indigo and the indigo yield was 54.0%.

### Comparative Example 3

Reaction was carried out in the same manner as in Example 5, except that the reaction temperature was changed to 5°C by cooling on an ice bath. While the toluene solution of m-chloroperbenzoic acid was added dropwise, white solid precipitated out. In the time of completion of adding, the reaction mixture was suspended. Thereafter, the reaction was continued for 3.5 hours under the same conditions, but no indigo was formed. Moreover, the reaction was continued for 20 hours. After completion of the reaction, the reaction mixture was filtered. The solid so separated was washed enough with methanol to be completely dissolved. Indigo was not obtained at all.

### Example 6

Reaction and after-treatment were carried out in the same manner as in Example 5, except that the amounts of m-chloroperbenzoic acid and toluene for dissolving the m-chloroperbenzoic acid were changed to 1.77 g (10.3 mmoles) and 40 ml (35 g), respectively, and the dropping time and reaction time were changed to 1.0 hour and 4.0 hours, respectively. Then, there was obtained 404 mg of indigo. According to gas chromatography, 462 mg (3.9 mmoles) of unreacted indole was remained in the reaction solution. The indole conversion was 53.8%, the indigo yield was 36.1%. The molar yield of the isolated indigo as based on the converted indole (hereinafter referred to briefly as the indigo selectivity) was 67.1%.

### Example 7

A four neck flask as used in Example 5 was charged with 1.0 g (8.5 mmoles) of indole and 35 ml (30 g) of toluene. While this mixture was being heated at 80°C on an oil bath and stirred, 1.95 g (10.3 mmoles as peracetic acid) of a 40 wt.% acetic acid solution of peracetic acid was added dropwise thereto over a period of 15 minutes. Thereafter, the reaction was continued for 5 hours under the same conditions. The resulting reaction mixture was worked up in the same manner as in Example 5. There was obtained 363 mg of indigo. According to the same analysis as in Example 6, the indole conversion was 79.9%, the indigo yield was 32.4% and the indigo selectivity was 40.6%.

### Comparative Example 4

Reaction, after-treatment and analysis were carried out in the same manner as in Example 7, except that the reaction temperature was changed to 5°C by cooling on an ice bath. As a result, the indole conversion was 58.3%, the indigo yield was 0.1% and the indigo selectivity was 0.2%.

### Comparative Example 5

Reaction, after-treatment and analysis were carried out in the same manner as in Example 7, except that 35 ml of acetic acid was used in place of the toluene. As a result, the indole conversion was 100%, the indigo yield was 3.0% and the indigo selectivity was 3.0%.

### Example 8

Reaction and after-treatment were carried out in the same manner as in Example 7, except that 35 ml of o-dichlorobenzene was used in place of the toluene and the reaction temperature was changed to 65°C. As a result, the indigo yield was 27.9%.

### Example 9

Reaction and after-treatment were carried out in the same manner as in Example 7, except that the amount of the 40 wt.% acetic acid solution of peracetic acid was changed to 8.12 g (42.7 mmoles as peracetic acid) and 35 ml of diphenyl ether was used in place of the toluene. As a result, the indigo yield was 23.4%.

### Example 10

Reaction and after-treatment were carried out in the same manner as in Example 7, except that 50 ml of 1,2-dichloroethane was used in place of the toluene. As a result, the indigo yield was 30.7%.

### Example 11

A four neck flask having a capacity of 200 ml and fitted with a stirrer, a thermometer, a dropping funnel and a cooling coil was charged with 1.0 g (8.5 mmoles) of indole, 29.9 mg (0.085 mmole) of tungsten hexacarbonyl, and 50 g of o-xylene. While this mixture was being heated at 80°C on an oil bath and stirred, a solution of 2.21 g (12.8 mmoles) of m-chloroperbenzoic acid dissolved in 50 g of o-xylene was added dropwise thereto over a period of 1.5 hours. Thereafter, the reaction was continued for 3 hours under the same conditions. The resulting reaction mixture was worked up in the same manner as in Example 1.

Thus, there was obtained 0.49 g of indigo. The indigo yield was 43.8%.

### Example 12

Reaction and after-treatment were carried out in the same manner as in Example 11, except that 30.6 mg (0.085 mmole) of 3-tert-butyl-4-hydroxy-5-methyl phenyl sulfide was used in place of the tungsten hexacarbonyl. Thus, there was obtained 0.51 g of indigo. The indigo yield was 45.6%.

### Example 13

Reaction was carried out in the same manner as in Example 11, except that 45.2 mg (0.43 mmole) of sodium carbonate was used in place of the tungsten hexacarbonyl. After completion of the reaction, the resulting reaction mixture was filtered. The solid so separated was washed enough with water and methanol and then dried at 50°C under reduced pressure to obtain 0.47 g of indigo. The indigo yield was 42.0%.

## Claims

1. A process for the preparation of an indigo compound which comprises reacting an indole compound having no substituent at the 2- and 3-positions with a percarboxylic acid in an aprotic solvent at a temperature above 60°C or in an alcohol solvent.

2. A process as claimed in claim 1, wherein the indole compound is selected from indole, alkylindoles, cycloalkylindoles, arylindoles, halogenated indoles, hydroxyindoles, alkoxyindoles, phenoxyindoles, halogenated alkylindoles, nitroindoles, acylindoles, acyloxyindoles, indolecarboxylic acids and esters thereof, N,N-dialkylaminoindoles and sulfonated indoles.

3. A process as claimed in claim 1 or claim 2, wherein the percarboxylic acid is selected from peraliphatic acids and perbenzoic acid derivatives.

4. A process as claimed in claim 3, wherein the percarboxylic acid is peracetic acid or m-chloroperbenzoic acid.

5. A process as claimed in any one of claims 1 to 4, wherein the percarboxylic acid is used in an amount of 0.01 to 100 moles per mole of the indole compound.

6. A process as claimed in any one of claims 1 to 5, wherein the reaction time is not longer than 50 hours.

7. A process as claimed in any one of claims 1 to 6, wherein the resulting indigo compound is recovered in the form of a solid by solid-liquid separation.

8. A process as claimed in any one of claims 1 to 7, wherein the reaction is carried out at -10 to 170°C in the alcohol solvent, or at 60 to 150°C in the aprotic solvent.

9. A process as claimed in any one of claims 1 to 8, wherein the aprotic solvent is selected from aliphatic and alicyclic hydrocarbons, aromatic hydrocarbons, aliphatic and aromatic halogen compounds, ethers, ketones, esters, carbonates, aliphatic and aromatic nitro compounds, and nitriles.

10. A process as claimed in any one of claims 1 to 9, wherein the reaction is carried out in the presence of a metallic compound catalyst capable of oxidizing the carbon atom at the 3-position of the indole compound and/or in the presence of a promotor.

11. A process as claimed in claim 10, wherein the metallic compound is of a metal selected from groups 4A, 5A and 6A of the periodic table, silver, aluminium, the iron group, the platinum group, and zinc.

12. A process as claimed in claim 11, wherein the metal is titanium, vanadium, molybdenum or tungsten.

13. A process as claimed in any one of claims 10 to 12, wherein the metallic compound catalyst is used in an amount of not greater than 0.5 mole per mole of the indole compound.

14. A process as claimed in claim 10, wherein the promotor is a compound selected from dehydrating agents, radical scavengers, ligands of catalytic metals, boric acid esters and metaboric acid esters, salts of alkaline metals and alkaline earth metals, and salts of rare earth metals.

15. A process as claimed in claim 14, wherein the promotor is used in an amount of not greater than 50 moles per mole of the indole compound.

## Patentansprüche

1. Verfahren zur Herstellung einer Indigo-Verbindung, das den Schritt umfaßt, eine Indol-Verbindung, die weder an der 2- noch an der 3-Position einen Substituenten trägt, mit einer Percarbonsäure in einem aprotischen Lösungsmittel bei einer Temperatur oberhalb 60°C oder in einem alkoholischen Lösungsmittel umzusetzen.

2. Das Verfahren nach Anspruch 1, wobei die Indol-Verbindung ausgewählt ist aus Indol, Alkylindolen, Cycloalkylindolen, Arylindolen, halogenierten Indolen, Hydroxyindolen, Alkoxyindolen, Phenoxyindolen, halogenierten Alkylindolen, Nitroindolen, Acylindolen, Acyloxyindolen, Indolcarbonsäuren und deren Estern, N,N-Dialkylaminoindolen und sulfonierten Indolen.

3. Das Verfahren nach einem der Ansprüche 1 oder 2, wobei die Percarbonsäure ausgewählt ist aus peraliphatischen Säuren und Derivaten der Perbenzoesäure.

4. Das Verfahren nach Anspruch 3, wobei die Percarbonsäure Peressigsäure oder m-Chlorperbenzoesäure ist.

5. Das Verfahren nach einem der vorhergehenden Ansprüche 1 bis 4, wobei die Percarbonsäure in einer Menge von 0,01 bis 100 Mol pro Mol der Indol-Verbindung verwendet wird.

6. Das Verfahren nach einem der vorhergehenden Ansprüche 1 bis 5, wobei die Reaktionszeit nicht länger als 50 Stunden beträgt.

7. Das Verfahren nach einem der vorhergehenden Ansprüche 1 bis 6, wobei die resultierende Indigo-Verbindung mittels Fest-Flüssig-Trennung in Form eines Feststoffes gewonnen wird.

8. Das Verfahren nach einem der vorhergehenden Ansprüche 1 bis 7, wobei die Reaktion bei -10 bis 170°C in dem alkoholischen Lösungsmittel oder bei 60 bis 150°C in dem aprotischen Lösungsmittel durchgeführt wird.

9. Das Verfahren nach einem der vorhergehenden Ansprüche 1 bis 8, wobei das aprotische Lösungsmittel ausgewählt ist aus aliphatischen und alicyclischen Kohlenwasserstoffen, aromatischen Kohlenwasserstoffen, aliphatischen und aromatischen Halogen-Verbindungen, Ethern, Ketonen, Estern, Carbonaten, aliphatischen und aromatischen Nitro-Verbindungen und Nitrilen.

10. Das Verfahren nach einem der vorhergehenden Ansprüche 1 bis 9, wobei die Reaktion in Gegenwart einer metallischen Verbindung als Katalysator, der zur Oxidation des Kohlenstoff-Atoms an der 3-Position der Indol-Verbindung in der Lage ist, und/oder in Gegenwart eines Aktivators durchgeführt wird.

11. Das Verfahren nach Anspruch 10, wobei die metallische Verbindung ein Metall ist, das aus den Gruppen 4A, 5A und 6A des Perioden-Systems, aus Silber, Aluminium, der Eisen-Gruppe, der Platin-Gruppe und Zink ausgewählt ist.

12. Das Verfahren nach Anspruch 11, wobei das Metall Titan, Vanadin, Molybdän oder Wolfram ist.

13. Das Verfahren nach einem der Ansprüche 10 bis 12, wobei die metallische Verbindung als Katalysator in einer Menge von nicht mehr als 0,5 Mol pro Mol der Indol-Verbindung verwendet wird.

14. Das Verfahren nach Anspruch 10, wobei der Aktivator eine Verbindung ist, die ausgewählt ist aus Dehydratisierungsmitteln, Radikalfängern, Liganden katalytischer Metalle, Borsäureestern und Metaborsäureestern, Salzen von Alkalimetallen und Erdalkalimetallen und Salzen von Seltenen Erdmetallen.

15. Das Verfahren nach Anspruch 14, wobei der Aktivator in einer Menge von nicht mehr als 50 Mol pro Mol der Indigo-Verbindung verwendet wird.

## Revendications

1. Un procédé pour la préparation d'un composé indigo, qui comprend la réaction d'un composé indole, n'ayant pas de substituant dans les positions 2 et 3, avec un acide percarboxylique, dans un solvant aprotique à une température supérieure à 60°C, ou dans un solvant alcoolique.

2. Un procédé selon la revendication 1, dans lequel le composé indole est choisi parmi l'indole, les alkylindoles, les cycloalkylindoles, les arylindoles, les indoles halogénés, les hydroxyindoles, les alcoxyindoles, les phénoxyindoles, les alkylindoles halogénés, les nitro-indoles, les acylindoles, les acyloxyindoles, les acides indolecarboxyliques et leurs esters, les N,N-dialkylamino-indoles et les indoles sulfonés.

3. Un procédé selon la revendication 1 ou la revendication 2, dans lequel l'acide percarboxylique est choisi parmi les acides peraliphatiques et les dérivés de l'acide perbenzoïque.

4. Un procédé selon la revendication 3, dans lequel l'acide percarboxylique est l'acide peracétique ou l'acide m-chloroperbenzoïque.

5. Un procédé selon l'une quelconque des revendications 1 à 4, dans lequel l'acide percarboxylique est utilisé en une quantité de 0,01 à 100 moles par mole du composé indole.

6. Un procédé selon l'une quelconque des revendications 1 à 5, dans lequel la durée de réaction ne dépasse pas 50 heures.

7. Un procédé selon l'une quelconque des revendications 1 à 6, dans lequel le composé indigo obtenu est récupéré sous forme d'un solide par séparation solide-liquide.

8. Un procédé selon l'une quelconque des revendications 1 à 7, dans lequel la réaction est réalisée entre -10 et 170°C dans le solvant alcoolique ou entre 60 et 150°C dans le solvant aprotique.

9. Un procédé selon l'une quelconque des revendications 1 à 8, dans lequel le solvant aprotique est choisi parmi les hydrocarbures aliphatiques et alicycliques, les hydrocarbures aromatiques, les composés halogénés aliphatiques et aromatiques, les éthers, les cétones, les esters, les carbonates, les composés nitro aliphatiques et aromatiques et les nitriles.

10. Un procédé selon l'une quelconque des revendications 1 à 9, dans lequel la réaction est effectuée en présence d'un catalyseur fait d'un composé métallique capable d'oxyder l'atome de carbone de la position 3 du composé indole, et/ou en présence d'un promoteur.

11. Un procédé selon la revendication 10, dans lequel le composé métallique est un composé d'un métal choisi dans les groupes 4A, 5A et 6A de la classification périodique, l'argent, l'aluminium, le groupe du fer, le groupe du platine et le zinc.

12. Un procédé selon la revendication 11, dans lequel le métal est le titane, le vanadium, le molybdène ou le tungstène.

13. Un procédé selon l'une quelconque des revendications 10 à 12, dans lequel le catalyseur fait d'un composé métallique est utilisé en une quantité ne dépassant pas 0,5 mole par mole du composé indole.

14. Un procédé selon la revendication 10, dans lequel le promoteur est un composé choisi parmi les agents déshydratants, les bloqueurs de radicaux, les ligands des métaux catalytiques, les esters de l'acide borique et les esters de l'acide métaborique, les sels des métaux alcalins et des métaux alcalino-terreux et les sels des métaux des terres rares.

15. Un procédé selon la revendication 14, dans lequel le promoteur est utilisé en une quantité ne dépassant pas 50 moles par mole du composé indole.
